(19) Europäisches Patentamt
European Patent Office
Office européen des brevets

(11) Veröffentlichungsnummer: **0 548 762 A1**

# (12) EUROPÄISCHE PATENTANMELDUNG

(21) Anmeldenummer: **92121355.9**

(22) Anmeldetag: **16.12.92**

(51) Int. Cl.5: **C08F 285/00**, //C08L27/06, (C08F285/00,212:08)

(30) Priorität: **24.12.91 DE 4142910**

(43) Veröffentlichungstag der Anmeldung: **30.06.93 Patentblatt 93/26**

(84) Benannte Vertragsstaaten: **BE DE ES FR GB IT NL**

(71) Anmelder: **BASF Aktiengesellschaft**
**Carl-Bosch-Strasse 38**
**W-6700 Ludwigshafen(DE)**

(72) Erfinder: **Niessner, Norbert, Dr.**
**Buhl'scher Hof 10**
**W-6701 Friedelsheim(DE)**
Erfinder: **Fischer, Wolfgang, Dr.**
**Lindenberger Strasse 4**
**W-6700 Ludwigshafen(DE)**
Erfinder: **Guentherberg, Norbert, Dr.**
**Nachtigallenweg 44**
**W-6720 Speyer(DE)**
Erfinder: **Ruppmich, Karl**
**Koenigsbacher Strasse 134**
**W-6700 Ludwigshafen(DE)**
Erfinder: **Seitz, Friedrich, Dr.**
**Von-Wieser-Strasse 1**
**W-6701 Friedelsheim(DE)**

## (54) Schlagzähmodifier und diesen enthaltende Formmasse.

(57) Pfropfcopolymerisat A bestehend aus - in der Reihenfolge A1 bis A4 von innen nach außen und jeweils bezogen auf die Summe aus A1 bis A4 -

A1: 5 bis 90 Gew.-% eines Kerns mit einer Glastemperatur $T_g$ oberhalb von 25°C, bestehend aus, bezogen auf A1:

A11:50 bis 99,9 Gew.-% eines vinylaromatischen Monomeren,

A12:0,1 bis 10 Gew.-% eines polyfunktionellen, vernetzend wirkenden Monomeren und/oder ein pfropfaktiv wirkendes Monomer mit zwei oder mehr funktionellen Gruppen unterschiedlicher Reaktivität, wobei vernetzende und pfropfaktive Wirkung auf ein einziges Monomer zutreffen können,

A13:bis 49,9 Gew.-% eines oder mehrerer copolymerisierbarer Monomerer;

A2: 5 bis 90 Gew.-% einer ersten Hülle aus kautschukelastischem Material mit einer Glastemperatur $T_g$ unterhalb von 10°C, bestehend aus, bezogen auf A2:

A21:50 bis 99,8 Gew.-% eines Alkylacrylates mit 1 bis 18 C-Atomen im Alkylrest und/oder eines Diens,

A22:0,1 bis 10 Gew.-% eines polyfunktionellen, vernetzend wirkenden Monomeren und/oder mindestens eines pfropfaktiven Monomeren mit zwei oder mehr funktionellen Gruppen unterschiedlicher Reaktivität, wobei vernetzende und pfropfaktive Wirkung auf ein einziges Monomer zutreffen können,

A23:0 bis 49,8 Gew.-% eines oder mehrerer copolymerisierbarer ungesättigter Monomerer;

A24:0,1 bis 10 Gew.-% eines oder mehrere saure Gruppen enthaltenden Monomeren.

A3: 5 bis 90 Gew.-% einer zweiten Hülle aus hartem Material mit einer Glastemperatur $T_g$ oberhalb von 25°C, bestehend aus, bezogen auf A3:

A31:50 bis 99,9 Gew.-% eines vinylaromatischen Monomeren,

A32:bis 10 Gew.-% eines polyfunktionellen, vernetzend wirkenden Monomeren und/oder mindestens eines pfropfaktiven Monomeren mit zwei oder mehr funktionellen Gruppen unterschiedlicher Reaktivität,

A33:bis 49,9 Gew.-% eines oder mehrerer copolymerisierbarer Monomerer;

A34:0,1 bis 20 Gew.-% eines eine oder mehrere basische Gruppen enthaltenden Monomeren;

A4: bis 85 Gew.-% einer dritten Hülle aus einem Copolymeren aus, bezogen auf A4:

A41:1 bis 99 Gew.-% eines oder mehrerer vinylaromatischer Monomerer,

A42:1 bis 99 Gew.-% eines oder mehrerer copolymerisierbarer Monomerer

EP 0 548 762 A1

Die Erfindung betrifft ein durch Emulsionspolymerisation hergestelltes, mehrschalig aufgebautes Pfropfcopolymerisat und seine Verwendung zur Herstellung von Mischungen, die sich als Formmasse eignen.

Gewisse Pfropfcopolymerisate werden vor allem als sog. Schlagzähmodifier, z.B. für PVC, PMMA usw. verwendet, wobei das Pfropfcopolymerisat in Form von Teilchen in einem thermoplastischen Polymeren dispergiert ist.

Vorteilhafterweise handelt es sich bei den einschlägig bekannten Pfropfcopolyzmerisaten mit Kern/Schale-Aufbau um 3- oder mehr-stufige Polymerisate, bestehend aus einem "harten" Kern und einer "weichen" ersten Hülle (oder vice versa) und einer oder mehrerer weiterer Hüllen, wobei die äußerste Hülle im allgemeinen eine "harte" Hülle ist, welche die (Teil-)Verträglichkeit zu einer thermoplastischen Matrix herstellen soll.

Die Begriffe "hart" und "weich" beziehen sich auf die Lage der Glasübergangstemperatur Tg der entsprechenden Homopolymeren oberhalb bzw. unterhalb Raumtemperatur).

Der Kern/Schale-Aufbau, insbesondere im Falle der PVC- und PMMA-Modifier dient dazu, den Unterschied des Brechungsindex zwischen dispergierter Kautschukphase und kontinuierlicher thermoplastischer Hartmatrix - zumindest teilweise - anzugleichen. Daraus resultieren sowohl schlagzähe als auch transparente thermoplastische Werkstoffe.

Von den Pfropfcopolymerisaten zeichnen sich diejenigen ohne ungesättigte Anteile durch eine besondere Witterungsstabilität aus. Dabei handelt es sich insbesondere um Acrylatkautschuke. Vernetzend und/oder pfropfaktiv wirkende Monomere sorgen einerseits für ein kautschukelastisches Verhalten dieser Acrylatkautschuke und ermöglichen andererseits eine Anbindung weiterer Hüllen an die Kautschuk-Grundlage. Eine ausführliche Diskussion optisch transparenter Mehrphasensysteme findet sich in: H.J. Biangardi, H. Sturm, G. Kostersitz, Angew. Makromol. Chem. 183, 221-241 (1990).

Um das physikalisch wirksame Kautschukvolumen zu vergrößern ohne die effektive Kautschukmenge zu erhöhen, müssen Anteile einer Hartkomponente in die Kautschukteilchen eingeschlossen werden. Dieses Konzept liegt der Entwicklung des schlagzähmodifizierten Polystyrols (high impact polystyrene) oder der ABS-Kunststoffe zugrunde (z.B. beschrieben in "Rubber Toughened Plastics", Advances in Chemistry Series 222, S. 2 (1989)). Das bedeutet, daß im Falle eines Emulsionspolymerisats ein harter Kern von einer weichen ersten Hülle umschlossen sein muß, die dann eine weitere, mit der kontinuierlichen thermoplastischen Matrix verträgliche zweite Hülle besitzt.

In der DE-A-2 107 350 und in der BE-A-783 190 sind mehrschichtig aufgebaute Emulsionscopolymerisate mit hart-weichhart-Morphologie beschrieben. Der Aufbau der äußeren, harten Schale erfolgt jedoch nicht kontrolliert in einer Emulsionssondern in einer Suspensionspolymerisation. Diese Teilchen ermöglichen eine gute Schlagzähmodifizierung.

In der BE-A-770 035, DE-A-2 244 519 und der US-A-3 971 835 werden Systeme aus einem harten Styrol-Kern, einer ersten Hülle aus Butylacrylat-Kautschuk und einer zweiten Hülle aus MMA zur Schlagzähmodifizierung von PVC beschrieben.

In der JA-A-7 023 150 wird ein System aus einem Styrol-Kern, einer ersten Hülle aus einem vernetztem Alkylacrylat und einer zweiten Hülle aus - beispielsweise - einer Mischung aus Styrol und Acrylnitril zur Schlagzähmodifizierung von PVC vorgeschlagen.

In der FR-A-2 324 660 wird ein System aus einem unvernetztem Polystyrol-co-MMA-Kern und einer unvernetzten katuschukartigen Hülle aus Alkylacrylat + Styrol/Acrylnitril beschrieben, als Verarbeitungshilfsmittel für PVC Formmassen.

Die US-A-4 082 895 empfiehlt Pfropfcopolymere aus einem Acrylnitril-Copolymeren als Kern, einer ersten Hülle aus vernetztem Acrylat-Kautschuk und einer äußeren Hülle aus beispielsweise Styrol/Acrylnitril. Nachteilig ist hier die bei hohem Acrylnitrilgehalt auftretende Vergilbung.

PMMA-Modifier aus einem harten Kern, einer elastomeren ersten Hülle und einer zweiten Hülle aus mindestens 80 % MMA werden in der DE-A-3 300 526 beschrieben.

DE-A-23 24 316 beschreibt einen mehrschaligen Acrylatkautschuk aus einem harten, vernetzten Kern, einer ersten Hülle aus Acrylat und einer zweiten Hülle aus beispielsweise einem Styrol-Acrylnitril-Copolymeren.

In den JA-A-85 063 248, 85 069 154 und 85 147 460 werden Pfropfcopolymere beschrieben mit einem harten Kern aus z.B. Polystyrol, einer ersten Hülle aus z.B. Butylacrylat und einer äußeren Hülle aus z.B. einem Styrol-Copolymeren. Diese Pfropfcopolymerisate haben eine ausgezeichnete Witterungsstabilität und weisen im allgemeinen eine gute Transparenz auf; sie besitzen jedoch nur allenfalls befriedigende, nicht aber gute schlagzähmodifizierende Wirkung.

Ein Hauptproblem bei der Herstellung solcher teilchenförmiger Pfropfpolymerisate ist die Anbindung der Pfropfhülle an die Pfropfgrundlage. Bei schlechter Anbindung ist die schlagzähmodifizierende Wirkung nicht ausreichend, so daß nur Produkte mit verminderter Zähigkeit erhalten werden können. Zur Verbesserung der Anbindung wurden eine Reihe von Maßnahmen vorgeschlagen, von denen hier nur die Verwendung "pfropfaktiver" (graft-linking bzw. graft-enhancing) Monomerer bei der Herstellung der Pfropfgrundlage genannt sei (z.B. US-PS 47 64 563, EP-A-231 933).

Nach einer in der EP-A-231 933 gegebenen Definition unterscheiden sich "pfropfaktive" Monomere von "vernetzend wirkenden" (cross-linking) Monomeren dadurch, daß pfropfaktive Monomere zwei oder mehr polymerisierbare Doppelbindungen enthalten, die sich in ihrer Reaktivität bezüglich der Polymerisation deutlich unterscheiden, während die Doppelbindungen vernetzend wirkender Monomerer annähernd gleiche Reaktivität aufweisen. Man weiß jedoch, daß eine solch scharfe Unterscheidung in der Regel nicht möglich ist, weil auch die weniger reaktiven Doppelbindungen der pfropfaktiven Monomeren bereits bei der Herstellung der Pfropfgrundlage teilweise reagieren und damit zu einer erhöhten Vernetzung der Pfropfgrundlage führen. Sie stehen damit für Pfropfreaktionen nicht mehr zur Verfügung. Andererseits läßt sich der Anteil der pfropfaktiven Monomeren an der Pfropfgrundlage nicht beliebig erhöhen, weil ihre vernetzende Wirkung zu einer Versprödung des als Pfropfgrundlage verwendeten elastomeren Polymerisats führt.

An sich ist bekannt (vgl. DE-A 34 21 353), sowohl saure als auch gleichzeitig basische Monomere in der Pfropfhülle einer Kautschukkomponente zu verwenden; dies soll dazu dienen, Polymere mit matter Oberfläche zu erzeugen. Die Wirkung der gleichzeitigen Verwendung eines sauren Monomeren und einer Base im Sinne einer deutlich verbesserten Kerbschlagzähigkeit ist in EP-A-450 511 beschrieben, jedoch nicht im Zusammenhang mit Kern/Schale-Aufbau.

Unmittelbarer Erfindungsgegenstand ist ein Pfropfcopolymerisat, bestehend aus - in der Reihenfolge A1 bis A4 von innen nach außen und jeweils bezogen auf die Summe aus A1 bis A4 -

A1: 5 bis 90 Gew.-% eines Kerns mit einer Glastemperatur $T_g$ oberhalb von 25 °C, bestehend aus, bezogen auf A1:

- A11:50 bis 99,9 Gew.-% eines vinylaromatischen Monomeren,
- A12:0,1 bis 10 Gew.-% eines polyfunktionellen, vernetzend wirkenden Monomeren und/oder ein pfropfaktiv wirkendes Monomer mit zwei oder mehr funktionellen Gruppen unterschiedlicher Reaktivität, wobei vernetzende und pfropfaktive Wirkung auf ein einziges Monomer zutreffen können,
- A13:bis 49,9 Gew.-% eines oder mehrerer copolymerisierbarer Monomerer;

A2: 5 bis 90 Gew.-% einer ersten Hülle aus kautschukelastischem Material mit einer Glastemperatur $T_g$ unterhalb von 10 °C, bestehend aus, bezogen auf A2:

- A21:50 bis 99,8 Gew.-% eines Alkylacrylates mit 1 bis 18 C-Atomen im Alkylrest und/oder eines Diens,
- A22:0,1 bis 10 Gew.-% eines polyfunktionellen, vernetzend wirkenden Monomeren und/oder mindestens eines pfropfaktiven Monomeren mit zwei oder mehr funktionellen Gruppen unterschiedlicher Reaktivität, wobei vernetzende und pfropfaktive Wirkung auf ein einziges Monomer zutreffen können,
- A23:0 bis 49,8 Gew.-% eines oder mehrerer copolymerisierbarer ungesättigter Monomerer;
- A24:0,1 bis 10 Gew.-% eines oder mehrere saure Gruppen enthaltenden Monomeren.

A3: 5 bis 90 Gew.-% einer zweiten Hülle aus hartem Material mit einer Glastemperatur $T_g$ oberhalb von 25 °C, bestehend aus, bezogen auf A3:

- A31:50 bis 99,9 Gew.-% eines vinylaromatischen Monomeren,
- A32:bis 10 Gew.-% eines polyfunktionellen, vernetzend wirkenden Monomeren und/oder mindestens eines pfropfaktiven Monomeren mit zwei oder mehr funktionellen Gruppen unterschiedlicher Reaktivität,
- A33:bis 49,9 Gew.-% eines oder mehrerer copolymerisierbarer Monomerer;
- A34:0,1 bis 20 Gew.-% eines eine oder mehrere basische Gruppen enthaltenden Monomeren;

A4: bis 85 Gew.-% einer dritten Hülle aus einem Copolymeren aus, bezogen auf A4:

- A41:1 bis 99 Gew.-% eines oder mehrerer vinylaromatischer Monomerer,
- A42:1 bis 99 Gew.-% eines oder mehrerer copolymerisierbarer Monomerer

und seine Verwendung zur Herstellung von Mischungen, d.h. Schlagzähmodifizierung von harten, thermoplastischen Polymeren.

Wesentlicher Teil der Erfindung ist die Erkenntnis, daß die Anbindung der Pfropfhülle (A3) an die Pfropfgrundlage (A2) erheblich verbessert werden kann, wenn als Pfropfgundlage (A2) ein Polymerisat verwendet wird, das entweder 50 bis 99,8 Gew.-% eines Alkylacrylats (A21) mit 1 bis 18 Kohlenstoffatomen im Alkylrest, oder mindestens eines Diens, 0,1 bis 10 Gew.-% eines polyfunktionellen, vernetzend wirkenden Monomeren und/oder mindestens eines pfropfaktiven Monomeren (A22) sowie 0,1 bis 10 Gew.-% eines mindestens eine saure Gruppe enthaltenden Monomeren (A24) und bis zu 49,8 Gew.-% mindestens eines weiteren ethylenisch ungesättigten Monomeren (A23) einpolymerisiert enthält, auf das als Pfropfhülle (A3) ein Monomerengemisch aus 50 bis 99,9 Gew.-% eines vinylaromatischen Monomeren (A31), 10 bis 49,9 Gew.-% mindestens eines copolymerisierbaren, ethylenisch ungesättigten Monomeren (A33), 0,1 bis 10

Gew.-% eines mindestens eine basische Gruppe enthaltenden Monomeren (A34) und bis 10 Gew-% mindestens eines polyfunktionellen, vernetzend wirkenden Monomeren und/oder mindestens eines pfropfaktiven Monomeren (A32) aufgepfropft wird. Dies wirkt sich in höherer Kerbschlagzähigkeit und in einer geringeren Abhängigkeit der Kerbschlagzähigkeit von der Verarbeitungstemperatur im Spritzguß aus. Die Bestandteile A24 und A34 können auch vertauscht werden. Bei der Vertauschung sollen die Mengenverhältnisse der übrigen Bestandteile im Sinne der vorstehenden bzw. nachstehenden Lehre behandelt und ggf. angepaßt werden.

Bevorzugt enthalten die erfindungsgemäßen Pfropfpolymeren A 10 bis 50 Gew.-% A1, 20 bis 60 Gew.-% A2, 20 bis 60 Gew.-% A3 und 10 bis 30 Gew.-% A4; die Anteile der einzelnen Monomeren, bezogen jeweils auf A1, A2, A3 bzw. A4 sollten bevorzugt sein:

A11: 70 bis 99,5 Gew.-%
A12: 0,5 bis 5 Gew.-%
A13: bis 29,5 Gew.-%
A21: 70 bis 99 Gew.-%
A22: 0,5 bis 5 Gew.-%
A23: bis 29,3 Gew.-%
A24: 0,2 bis 5 Gew.-%
A31: 65 bis 99 Gew.-%
A32: bis 5 Gew.-%
A33: bis 40 Gew.-%
A34: 0,2 bis 10 Gew.-%
A41: 10 bis 90 Gew.-%
A42: 10 bis 90 Gew.-%

Komponente A

Pfropfgrundlage A1

Die teilchenförmigen Pfropfcopolymerisate mit Kern/Schale-Aufbau werden zunächst in an sich bekannter Weise aus einer Pfropfgrundlage A1, sowie aus darauf nacheinander aufgepfropften Hüllen A2, A3 und A4 hergestellt. Die Pfropfgrundlage wird am besten in wäßriger Emulsion bei 20 bis 100 ° C, bevorzugt zwischen 40 und 80 ° C hergestellt. Hierbei werden vinylaromatische(s) Monomere(s) A11, sowie vernetzend wirkende, polyfunktionelle Monomere und/oder pfropfaktive Monomere A12, gegebenenfalls zusammen mit weiteren ethylenisch ungesättigten copolymerisierbaren Monomeren A13 polymerisiert. Vernetzende und pfropfaktive Eigenschaften können auf ein einziges Monomer zutreffen.

Beispiele für vinylaromatische Monomere sind Styrol, alpha-Methylstyrol und kernalkylierte Styrole wie p-Methylstyrol und tert.-Butylstyrol. Besonders bevorzugt werden Styrol, alpha-Methylstyrol und p-Methylstyrol allein oder in Mischung eingesetzt. Beispiele für weitere copolymerisierbare ethylenisch ungesättigte Monomere sind Acrylnitril, Acrylsäure, Maleinsäureanhydrid, Acrylamid, N-substituierte Acrylamide, Vinylmethylether, (Meth)acrylsäure-$C_1$-$C_8$-alkylester einzeln oder in Mischung.

Zur Erzielung guter mechanischer Eigenschaften hat es sich als notwendig erwiesen, daß das als Pfropfgrundlage verwendete Polymerisat sowohl vernetzt ist, als auch pfropfaktive Stellen für die anschließende Pfropfung vorhanden sind. Hierzu wird die Polymerisation in Gegenwart von 0,1 bis 10 Gew.-%, vorzugsweise von 0,5 bis 5 Gew.-%, bezogen auf das Gesamtgewicht der bei der Herstellung der Pfropfgrundlage verwendeten Monomeren A12 durchgeführt. Insbesondere wirken die verwendeten Vernetzer gleichzeitig als pfropfaktive Monomere, alternativ können pfropfaktive Monomere in Mengen von 0,1 bis 10 Gew.-% zusätzlich zu den vernetzend und ggf. pfropfaktiv wirkenden Monomeren hinzugegeben werden. Als Vernetzer wirken u.a. Divinylbenzol, Diallylmaleat, Diallylfumarat, Diallylphthalat, Triallylcyanurat oder Triallylisocyanurat. Als pfropfaktive Monomere wirken ungesättigte Monomere, die Epoxy-, Hydroxy-, Carboxyl-, Amino- oder Säureanhydridgruppe tragen, z.B. Hydroxyalkyl(meth)acrylate. Als besonders günstiger Vernetzer und pfropfaktives Monomer hat sich Dicyclopentadienylacrylat, der Acrylsäureester des Tricyclodecenylalkohols erwiesen (vgl.DE-A-12 60 135).

Die Glasübergangstemperatur der Pfropfgrundlage A1 liegt oberhalb von 25 ° C, vorzugsweise 50 ° C. (Die Glasübergangstemperatur wird z.B. mit Hilfe der DSC ermittelt; K.H. Illers; Makromol. Chem. 127, (1969)).

Es können die üblichen Emulgatoren wie Alkalisalze von Alkyl- oder Alkylarylsulfonsäuren, Alkylsulfate, Fettalkoholsulfonate, Salze höherer Fettsäuren mit 10 bis 30 C-Atomen oder Harzseifen verwendet werden. Vorzugsweise werden Natriumsalze von Alkylsulfonaten oder von Fettsäuren mit 10 bis 18 C-Atomen

verwendet. Bevorzugt werden Emulgatoren in Mengen von 0,5 bis 5 Gew.-%, bezogen auf das Gesamtgewicht der für die Herstellung der Pfropfgrundlage A1 verwendeten Monomeren eingesetzt. Als Polymerisationsinitiatoren dienen insbesondere die gebräuchlichen Persulfate, es sind jedoch auch Redoxsysteme geeignet. Die Menge an Initiatoren (z.B. 0,1 bis 1 Gew.-%) richtet sich in bekannter Weise nach dem gewünschten Molekulargewicht.

Als Polymerisationshilfsstoffe können die üblichen Puffersubstanzen wie Natriumhydrogencarbonat, Natriumpyrophosphat (mit denen pH-Werte zwischen 6 und 9 eingestellt werden können), sowie Molekulargewichtsregler, wie z.B. Mercaptane, Terpinole oder dimeres alpha-Methylstyrol, verwendet werden.

Die genauen Polymerisationsbedingungen, insbesondere Art, Dosierung und Menge des Emulgators werden innerhalb der oben angegebenen Bereiche im einzelnen so bestimmt, daß der erhaltene Latex des vernetzten Polymeren eine Teilchengröße (d(50)-Wert) im Bereich von etwa 30 bis 1000 nm, bevorzugt im Bereich von 50 bis 800 nm besitzt.

Prinzipiell ist es auch möglich, die Pfropfgrundlage nach einem anderen Verfahren als dem der Emulsionspolymerisation herzustellen, z.B. durch Masse- oder Lösungspolymerisation, und die erhaltenen Polymerisate nachträglich zu emulgieren. Die Verfahren hierfür sind bekannt.

Pfropfhülle A2:

Zur Pfropfung der ersten Hülle A2 auf den Kern A1 wird in Gegenwart der Pfropfgrundlage A1 mindestens ein Alkylacrylat A21 mit 1 bis 18 C-Atomen im Alkylrest (ggf. mit weiteren copolymerisierbaren Monomeren A23) oder mindestens eines Diens in Gegenwart von vernetzend wirkenden und pfropfaktiven Monomeren A22 und in Gegenwart mindestens eines eine oder mehrere saure Gruppen tragenden Monomeren polymerisiert.

Als Monomere A21 kommen Kautschukelastomere bildende Acrylsäurealkylester mit bis zu 18 C-Atomen, insbesondere solche mit 2 bis 8 C-Atomen im Alkylrest allein oder in Mischung in Frage. Insbesondere sind Acrylsäuren-butylester und Acrylsäureethylhexylester geeignet.

Das unter A1 für die vernetzenden und/oder pfropfaktiv wirkenden Monomeren A12 Gesagte gilt auch für A22. Für den Fall, daß als Monomere A21 Diene, wie z.B. Butadien, Isopren oder deren Derivate eingesetzt werden, können die erfindungsgemäß vernetzend wirkenden und/oder pfropfaktiv wirkenden Monomere selbstverständlich auch Butadien, Isopren und deren Derivate sein. In einer bevorzugten Ausführungsform besteht die Pfropfhülle A2 zu 90 bis 99,9 Gew.-% aus Butadien und zu 0,1 bis 10 Gew.-% aus (Meth)acrylsäure. Weitere copolymerisierbare Monomere A23 umfassen die unter A11 und A13 aufgeführten Monomeren.

Als Monomere A21 kommen ferner Diene wie Butadien, Isopren und deren Derivate in Betracht.

Zur Verbesserung der Anbindung der Pfropfhülle A3 an die Pfropfgrundlage A2 enthält das zur Herstellung der Pfropfgrundlage verwendete Monomerengemisch noch 0,1 bis 10 Gew.-%, bevorzugt 0,2 bis 5 Gew.-%, eines oder mehrerer Monomerer, die eine oder mehrere saure Gruppen enthalten (A24). Als saure Gruppen kommen insbesondere Carbonsäure- oder Sulfonsäuregruppen in Frage. Bevorzugte saure Monomere A24 sind alpha,beta-ungesättigte Carbonsäuren wie Acrylsäure oder Methacrylsäure, ferner Crotonsäure, Fumarsäure, Itaconsäure, Maleinsäure, Vinylsulfonsäure, Vinylbenzolsulfonsäure oder Zimtsäure.

Die Glasübergangstemperatur der Pfropfhülle A2 liegt unterhalb von 10 °C, bevorzugt unterhalb von 0 °C.

Es ist vorteilhaft, die Pfropfcopolymerisation auf das als Pfropfgrundlage dienende Polymerisat A1 wiederum in wäßriger Emulsion durchzuführen. Sie kann im gleichen System wie die Polymerisation der Pfropfgrundlage vorgenommen werden, wobei weiterer Emulgator und Initiator zugegeben werden kann. Diese müssen mit den zur Herstellung von A1 verwendeten Emulgatoren bzw. Initiatoren nicht identisch sein. Emulgator, Initiator und Polymerisationshilfsstoffe können jeweils allein oder in Mischung zur Emulsion der Pfropfgrundlage A1 vorgelegt werden. Sie können aber auch allein oder in Mischung zusammen mit den für die erste Hülle A2 verwendeten Monomer(en) zugegeben werden. Es kann zum Beispiel der Initiator und als Polymerisationshilfsmittel eine Puffersubstanz zur Emulsion der Pfropfgrundlage vorgelegt werden, und anschließend die Monomere für die Hülle gemeinsam mit dem Emulgator zugetropft werden. Es kann jede mögliche Kombination von Vorlage und Zulauf einerseits und Initiator, Emulgator und Polymerisationshilfsmittel andererseits in Frage kommen. Geeignete Verfahren sind bekannt, z.B. auch "Houben-Weyl, Polymere I, S. 219 ff). Im übrigen gilt für die Wahl von Emulgator, Initiator und Polymerisationshilfsstoffen das bei der Herstellung der Pfropfgrundlage Gesagte.

Pfropfhülle A3:

Zur Herstellung des Pfropfmischpolymerisates aus Kern und Pfropfhülle wird in Gegenwart des erhaltenen Latex A1 + A2 ein Monomerengemisch aus 50 bis 99,9 Gew.-% mindestens eines vinylaromatischen Monomeren A31, bis 49,9 Gew.-% mindestens eines copolymerisierbaren Monomeren A33, bis 10 Gew.-% mindestens eines polyfunktionell-vernetzend und/oder pfropfaktiven Monomeren A3 und 0,1 bis 20 Gew.-% mindestens eines basischen Monomeren A34 polymerisiert.

Als vinylaromatische Monomere, als polyfunktionelle vernetzend wirkende Monomere, als pfropfaktive Monomere und als weitere ethylenisch ungesättigte copolymerisierbare Monomere werden die für die Pfropfgrundlage A1 beschriebenen Verbindungen verwendet.

Geeignete basische Monomere A34 sind mit A31, A32 und A33 copolymerisierbare Monomere, die mindestens eine basische Gruppe im Molekül enthalten. Bevorzugte Monomere A34 enthalten im Molekül eine tertiäre Aminogruppe oder heteroaromatisch gebundenen Stickstoff. Hier seien als Beispiele genannt: N,N-Dimethylaminoethyl(meth)acrylat, Morpholinmethacrylat, N-Vinylimidazol, p-Dimethylaminostyrol, N-Vinylcarbazol, N-Vinylindol, N-Vinylpyrrol, 4-Vinylpyrimidin, 2-Vinylpyridin, 3-Vinylpyridin, 4-Vinylpyridin sowie deren Gemische. Besonders bevorzugte Monomere sind Ester der Acrylsäure oder Metharylsäure mit aliphatischen Alkoholen, die im Alkylrest eine tertiäre Aminogruppe enthalten. Als Beispiel seien Dimethylaminoethylacrylat und -methacrylat genannt. Bevorzugte Monomerengemische enthalten 65 bis 99 (70 bis 79,5) Gew.-% Styrol und/oder alpha-Methylstyrol, bis 40 (20 bis 35) Gew.-% Acrylnitril und 0,2 bis 10 (0,5 bis 5) Gew.-% der basischen Verbindung, wobei Dimethylaminoethylacrylat bevorzugt ist.

Die Glasübergangstemperatur der Pfropfhülle A3 liegt oberhalb 25 ° C, vorzugsweise oberhalb 50 ° C.

Es ist vorteilhaft, die Pfropfcopolymerisation auf das als Pfropfgrundlage dienende Polymerisat A1 + A2 wiederum in wäßriger Emulsion durchzuführen. Sie kann im gleichen System wie die Polymerisation der Pfropfgrundlage A1 + A2 vorgenommen werden, wobei weiterer Emulgator und Initiator zugegeben werden kann. Diese müssen mit den zur Herstellung von A1 und/oder A2 verwendeten Emulgatoren bzw. Initiatoren nicht identisch sein. Im übrigen gilt für die Wahl und Kombination von Emulgator, Initiator und Polymerisationshilfsstoffen das bei der Herstellung der Pfropfgrundlage und der ersten Hülle Gesagte.

Pfropfhülle A4:

Als vinylaromatische Monomere und als weitere ethylenisch ungesättigte copolymerisierbare Monomere finden die vorstehend beschriebenen Verbindungen Verwendung.

Zweckmäßig wird die Pfropfcopolymerisation der dritten Hülle wiederum in wäßriger Emulsion durchgeführt. Sie kann im gleichen System wie die Polymerisation der Pfropfgrundlage A1 + A2 + A3 vorgenommen werden, wobei weiterer Emulgator und Initiator zugegeben werden kann. Diese müssen mit den vorher verwendeten Emulgatoren bzw. Initiatoren nicht identisch sein. Im übrigen gilt für die Wahl und Kombination von Emulgator, Initiator und Polymerisationshilfsstoffen das bei der Herstellung der Pfropfgrundlage und ersten Hülle Gesagte.

Formmassen-Bestandteil B

Komponente B kann entweder Polyvinylchlord (B) oder mindestens ein Copolymerisat B sein. Bevorzugte Copolymerisate B sind solche aus wenigstens einem Monomeren B1 aus der Reihe Styrol, α-Methylstyrol, kernsubstituiertem Styrol, wie p-Methylstyrol, Alkyl(meth)acrylat mit wenigstens einem Monomeren B2 aus der Reihe Acrylnitril, Methacrylnitril, Maleinsäureanhydrid, Alkyl(meth)acrylat, N-substituiertem Maleinimid oder deren Mischungen. Komponente B wird, bezogen auf die Summe aus A, B und C, mit einem Anteil von 5 bis 95 Gew.-%, bevorzugt von 20 bis 90 Gew.-%, eingesetzt.

Copolymerisate B entstehen häufig bei der Pfropfpolymerisation zur Herstellung der Komponente A als Nebenprodukte, besonders dann, wenn große Mengen Monomere auf kleine Mengen Kautschuk gepfropft werden.

Die Copolymerisate B sind harzartig, thermoplastisch und kautschukfrei. Besonders bevorzugte Copolymerisate B sind solche aus Styrol mit Acrylnitril und gegebenenfalls mit Methylmetharylat, aus α-Methylstyrol mit Acrylnitril und gegebenenfalls mit Methylmethacrylat oder aus Styrol und α-Methylstyrol mit Acrylnitril und gegebenenfalls mit Methylmethacrylat und aus Styrol und Maleinsäureanhydrid.

Bevorzugte Gewichtsverhältnisse sind 50 bis 90 Gew.-% B1 und 10 bis 50 Gew.-% B2; besonders bevorzugte Gewichtsverhältnisse im thermoplastischen Copolymerisat B sind 60 bis 80 Gew.-% B1 und 40 bis 20 Gew.-% B2. Es können auch mehrere der beschriebenen Copolymeren gleichzeitig eingesetzt werden.

Die Copolymerisate B sind bekannt und lassen sich durch radikalische Polymerisation, insbesondere durch Emulsions-, Suspensions-, Lösungs- oder Massepolymerisation herstellen. Sie weisen Viskositätszahlen im Bereich von 40 bis 160, vorzugsweise von 60 bis 100 (ml/g) auf, dies entspricht Molekulargewichten $\overline{M}_w$ zwischen 15 000 und 200 000.

Komponente C

Erfindungsgemäß geeignete, thermoplastische, aromatische Polycarbonate C sind solche auf Basis der Diphenole der Formel (I)

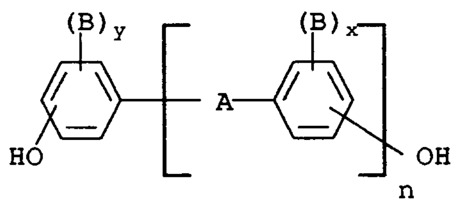

(I),

worin A: eine Einfachbindung, ein $C_1$-$C_5$-Alkylen, ein $C_2$-$C_5$-Alkyliden, ein $C_2$-$C_6$-Cycloalkyliden, -S- oder -$SO_2$-, B: Chlor, Brom oder $C_1$-$C_8$-Alkyl, x und y unabhängig voneinander: 0, 1 oder 2 und n: 1 oder 0 sind.

Erfindungsgemäß geeignete Polycarbonate C sind sowohl Homopolycarbonate als auch Copolycarbonate. Sie werden in Mengen, bezogen auf die Summe aus A + B + C, bis zu 90 Gew.-%, bevorzugt bis zu 70 Gew.-%, eingesetzt.

Die Diphenole der Formel (I) sind entweder literaturbekannt oder nach literaturbekannten Verfahren herstellbar.

Die Herstellung der erfindungsgemäß geeigneten Polycarbonate gemäß C ist bekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-Chlorphenol, p-tert.-Butylphenol oder 2,4,6-Tribromphenol, aber auch langkettige Alkylphenole wie 4-(1,3-Tetramethylbutyl)-phenol, gemäß DE-OS 2 842 005 oder Monoalkylphenole oder Dialkylphenole mit insgesamt 8 bis 20 C-Atomen in den Alkylsubstituenten gemäß deutscher Patentanmeldung P 35 06 472.2 (Le A 23 654), wie beispielsweise p-Nonylphenol, 3,5-di-tert.-Butylphenol, p-tert.-Octylphenol, p-Dodecylphenol, 2-(3,5-Dimethyl-heptyl)-phenol und 4-(3,5-Dimethylheptyl)-phenol und 4-(3,5-Dimethylheptyl)-phenol.

Die erfindungsgemäß geeigneten Polycarbonate C haben ein gewichtsgemitteltes Molekulargewicht ($\overline{M}_w$, gemessen beispielsweise mittels Ultrazentrifuge oder Streulicht) von 10 000 bis 200 000, vorzugsweise von 20 000 bis 80 000. Geeignete Diphenole der Formel (I) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan und 2,2-Bis-(3,5-dibrom-4-hydroxy-phenyl)-propan, 2,2-Bis-(3,5-dimethyl-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan, 2,2-Bis-(3,5-dimethyl-4-hydroxyphenyl)-propan und1,1-Bis-(4-hydroxyphenyl)-cyclohexan.

Die erfindungsgemäß geeigneten Polycarbonate C können in bekannter Weise verzweigt sein, und zwar vorzugsweise durch den Einbau von 0,05 bis 2,0 Mol.-%, bezogen auf die Summe der eingesetzten Diphenole, an drei- oder mehr als dreifunktionellen Verbindungen, beispielsweise solchen mit drei oder mehr als drei phenolischen OH-Gruppen.

Bevorzugte Polycarbonate sind neben dem Bisphenol-A-Homopolycarbonat die Copolycarbonate von Bisphenol A mit bis zu 15 Mol.-%, bezogen auf die Molsumme an Diphenolen, an 2,2-Bis-(3,5-dibrom-4-hydroxyphenyl)-propan.

Die erfindungsgemäßen teilchenförmigen Pfropfpolymerisate A können für sich allein als Formmassen verwendet werden. Hierzu können sie z.B. durch Sprühtrocknung aufgearbeitet werden. Bevorzugt werden die teilchenförmigen Pfropfpolymerisate jedoch zur Abmischung mit einem Thermoplasten verwendet, um dessen Schlagzähigkeit zu erhöhen. Zur Modifizierung geeignete Thermoplaste haben eine Glasübergangstemperatur über 25 °C, bevorzugt über 60 °C, besonders bevorzugt über 80 °C. Sie werden im folgenden auch als Hartkomponente (Matrix) bezeichnet. Beispiele für geeignete Hartkomponenten sind Polyvinylchlorid, Polymethylmethacrylat sowie insbesondere Copolymere aus vinylaromatischen Monomeren und polaren, copolymerisierbaren, ethylenisch ungesättigten Monomeren. Geeignete vinylaromatische sowie polare, copolymerisierbare, ethylenisch ungesättigte Monomere sind auch hier die bei der Herstellung der Pfropfhülle A3 als A31 und A33 genannten. Besonders bevorzugte Hartkomponenten sind Styrol-Acrylnitril- und $\alpha$-Methylstyrol-Acrylnitril-Copolymere. Die Einarbeitung der erfindungsgemäßen teilchenförmigen Pfropfpolymerisate kann z.B. dadurch erfolgen, daß das teilchenförmige Pfropfpolymerisat durch Zugabe eines Elektrolyten aus der Emulsion isoliert wird und anschließend, gegebenenfalls nach Trocknung, durch gemeinsames Extrudieren, Kneten oder Walzen mit der Hartkomponente vermischt wird.

Die erfindungsgemäßen thermoplastischen Formmassen können als weitere Bestandteile Zusatzstoffe erhalten, wie sie für thermoplastische Formmassen üblich sind. Als solche seien beispielsweise genannt: Füllstoffe, weitere, verträgliche Kunststoffe, Antistatika, Antioxidantien, Flammschutzmittel, Schmiermittel, Farbstoffe und Pigmente. Die Zusatzstoffe werden in üblichen Mengen, vorzugsweise in Mengen von 0,1 bis 30 Gew.-%, bezogen auf das Gesamtgewicht der thermoplastischen Formmasse eingesetzt. Verträgliche Kunststoffe können auch einen höheren Anteil ausmachen.

Die erfindungsgemäßen Massen lassen sich nach den für die Thermoplastverarbeitung üblichen Verfahren, wie z.B. Extrusion und Spritzgießen, zu Formkörpern, wie z.B. Fensterprofilen, Gartenmöbeln, Booten, Schildern, Lampenabdeckungen, Automobilteilen und Kinderspielzeug verarbeiten. Die erfindungsgemäßen Massen eignen sich besonders zur Herstellung von Formkörpern, bei denen eine hohe Schlagzähigkeit bei hoher Witterungs- und Alterungsbeständigkeit gefordert ist.

Die nachstehend zur Kennzeichnung verwendeten Größen wurden wie folgt bestimmt:

- Bei der Angabe der mittleren Teilchengröße handelt es sich in allen Fällen um das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Masseverteilung bezeichnet wird, ist dabei als der Wert definiert, bei dem 50 Gew.-% der Teilchen einen kleineren und 50 Gew.-% der Teilchen einen größeren Durchmesser als der $d_{50}$-Wert aufweisen.
- Die Viskositätszahl in [$cm^3$/g] wird an einer 0,5 %igen Lösung bei 23 °C in Dimethylformamid bestimmt. Unlösliche Gelanteile wurden vor der Messung durch Zentrifugieren entfernt und die Einwaage entsprechend korrigiert.

Beispiele

Zur Herstellung der Abmischungen wurde als Copolymer B ein handelsübliches Styrol/-Acrylnitril-Copolymerisat mit einem Acrylnitril-Gehalt von 35 % und einer Viskositätszahl von 80 ml/g verwendet. Das gefällte und getrocknete Pfropfmischpolymerisat A wurde auf einem Extruder bei 260 °C so mit Bestandteil B gemischt, daß das resultierende Gemisch einen Anteil von 50 % A aufwies. Aus diesem Gemisch wurden durch Spritzguß Formteile hergestellt.

Beispiel 1 (hierzu Tabelle 1)

Herstellung eines 3-stufigen Pfropfcopolymerisats mit Dicyclopentadienylacrylat als Vernetzer, Methacrylsäure in der ersten Hülle und N-Vinylimidazol in der zweiten Hülle

Herstellung der Pfropfgrundlage A1

4200 g Wasser, 6 g des Na-Salzes einer C12- bis C18-Paraffinsulfonsäure, 2 g Kaliumperoxodisulfat, 3 g Natriumhydrogencarbonat und 1,5 g Natriumpyrophosphat wurden unter Rühren auf 60 °C erwärmt. Ein Gemisch aus 588 g Styrol und 12 g Dicyclopentadienylacrylat wurde innerhalb von 3 Stunden zugegeben. Feststoffgehalt: 12,7 %; pH: 8,1; Teilchendurchmesser $d_{(50)}$: 83 nm.

Herstellung der ersten Hülle A2

Zur vorstehend beschriebenen Emulsion wurden 24 g des Na-Salzes einer C12- bis C18-Paraffinsulfonsäure, 7,2 g Kaliumperoxodisulfat, 6 g Natriumhydrogencarbonat und 3 g Natriumpyrophosphat bei 60 °C innerhalb von 2,5 Stunden zugetropft. Gleichzeitig wurden 2400 g eines Gemisches aus 98 Teilen n-Butylacrylat und 1 Teil Dicyclopentadienylacrylat und 1 Teil Methacrylsäure innerhalb von 2,5 Stunden zugetropft. Es wurde 2 Stunden bei 60 °C nachgerührt. Feststoffgehalt: 42,1 %; pH: 8,4; Teilchendurchmesser $d_{(50)}$: 126 nm.

Herstellung der zweiten Hülle A3

4800 g wie vorstehend erhaltene Emulsion, 1900 g Wasser und 5 g Kaliumperoxodisulfat werden unter Rühren auf 60 °C erwärmt. 940 g Styrol, 314 g Acrylnitril und 26 g N-Vinylimidazol werden innerhalb von 1 Stunde zudosiert, bei 30 min. Nachrührzeit. Feststoffgehalt: 41,4 %; pH: 8,4; Teilchendurchmesser $d_{(50)}$: 162 nm.

Vergleichsversuch 1

Herstellung eines 3-stufigen Pfropfcopolymerisats mit Butandioldiacrylat und Dicyclopentadienylacrylat als Vernetzer, ohne Mitverwendung eines sauren bzw. basischen Comonomeren

Herstellung einer Pfropfgrundlage

4200 g Wasser, 6 g des Na-Salzes einer C12- bis C18-Paraffinsulfonsäure, 2 g Kaliumperoxodisulfat, 3 g Natriumhydrogencarbonat und 1,5 g Natriumpyrophosphat wurden unter Rühren auf 60 °C erwärmt. Ein Gemisch aus 588 g Styrol und 12 g Dicyclopentadienylacrylat wurde innerhalb von 3 Stunden zugegeben. Feststoffgehalt: 12,7 %; pH: 8,1; Teilchendurchmesser $d_{(50)}$: 82 nm.

Herstellung einer ersten Hülle

Zur vorstehend beschriebenen Emulsion wurden 24 g des Na-Salzes einer C12- bis C18-Paraffinsulfonsäure, 7,2 g Kaliumperoxodisulfat, 6 g Natriumhydrogencarbonat und 3 g Natriumpyrophosphat bei 60 °C innerhalb von 2,5 Stunden zugetropft. Gleichzeitig wurden 2400 g eines Gemisches aus 98 Teilen n-Butylacrylat und 2 Teilen Tricyclodecenylacrylat innerhalb von 2,5 Stunden zugetropft. Es wurde 2 Stunden bei 60 °C nachgerührt. Feststoffgehalt: 42,1 %; pH: 8,3; Teilchendurchmesser $d_{(50)}$: 151 nm.

Herstellung einer zweiten Hülle

4800 g wie vorstehend erhaltene Emulsion, 1900 g Wasser und 5 g Kaliumperoxodisulfat werden unter Rühren auf 60 °C erwärmt. 960 g Styrol und 320 g Acrylnitril werden innerhalb von 1 Stunde zudosiert, bei 30 min. Nachrührzeit. Feststoffgehalt: 41,4 %; pH: 8,4; Teilchendurchmesser $d_{(50)}$: 180 nm.

Vergleichsversuch 2

Herstellung eines 2-stufigen Pfropfcopolymerisats mit Dicyclopentadienylacrylat als Vernetzer

Herstellung der Pfropfgrundlage

4200 g wasser, 30 g des Na-Salzes einer C12- bis C18-Paraffinsulfonsäure, 9,2 g Kaliumperoxodisulfat, 9 g Natriumhydrogencarbonat und 4,5 g Natriumpyrophosphat wurden unter Rühren auf 60 °C erwärmt. Ein Gemisch aus 2940 g n-Butylacrylat und 60 g Dicyclopentadienylacrylat wurde innerhalb von 3 Stunden zugegeben. Feststoffgehalt: 42,1 %; pH: 8,1; Teilchendurchmesser $d_{(50)}$: 148 nm.

Herstellung einer Hülle

4800 g der wie vorstehend erhaltenen Emulsion, 1900 g Wasser und 5 g Kaliumperoxodisulfat werden unter Rühren auf 65 °C erwärmt. 960 g Styrol und 320 g Acrylnitril werden innerhalb von 1 Stunde zudosiert, bei 30 min Nachrührzeit. Feststoffgehalt: 41,4 %; pH: 8,2; Teilchendurchmesser $d_{(50)}$: 180 nm.

Tabelle 1 - Abmischung eines Pfropfkautschuks A mit einem Styrol/Acrylnitril-Copolymerisat B im Verhältnis 1:1
Kerbschlagzähigkeit $a_K$ in [$kJ/m^2$] nach DIN 53 453 bei unterschiedlichen Spritzguß-Verarbeitungstemperaturen

| | Verarbeitungstemperatur der Prüflinge | | | |
|---|---|---|---|---|
| | 220°C | 250°C | 280°C | 280°C |
| Meßtemperatur | 23°C | 23°C | 23°C | 0°C |
| Beispiel 1 | 27,6 | 29,8 | 30,7 | 7,7 |
| Vergleichsversuch 1 | 19,7 | 28,3 | 30,9 | 5,6 |
| Vergleichsversuch 2 | 7,9 | 19,6 | 23,1 | 7,0 |

## Patentansprüche

1. Pfropfcopolymerisat A bestehend aus - in der Reihenfolge A1 bis A4 von innen nach außen und jeweils bezogen auf die Summe aus A1 bis A4 -

A1: 5 bis 90 Gew.-% eines Kerns mit einer Glastemperatur $T_g$ oberhalb von 25 ° C, bestehend aus, bezogen auf A1:

A11: 50 bis 99,9 Gew.-% eines vinylaromatischen Monomeren,

A12:0,1 bis 10 Gew.-% eines polyfunktionellen, vernetzend wirkenden Monomeren und/oder ein pfropfaktiv wirkendes Monomer mit zwei oder mehr funktionellen Gruppen unterschiedlicher Reaktivität, wobei vernetzende und pfropfaktive Wirkung auf ein einziges Monomer zutreffen können,

A13:bis 49,9 Gew.-% eines oder mehrerer copolymerisierbarer Monomerer;

A2: 5 bis 90 Gew.-% einer ersten Hülle aus kautschukelastischem Material mit einer Glastemperatur $T_g$ unterhalb von 10 ° C, bestehend aus, bezogen auf A2:

A21: 50 bis 99,8 Gew.-% eines Alkylacrylates mit 1 bis 18 C-Atomen im Alkylrest und/oder eines Diens,

A22:0,1 bis 10 Gew.-% eines polyfunktionellen, vernetzend wirkenden Monomeren und/oder mindestens eines pfropfaktiven Monomeren mit zwei oder mehr funktionellen Gruppen unterschiedlicher Reaktivität, wobei vernetzende und pfropfaktive Wirkung auf ein einziges Monomer zutreffen können,

A23:0 bis 49,8 Gew.-% eines oder mehrerer copolymerisierbarer ungesättigter Monomerer;

A24:0,1 bis 10 Gew.-% eines oder mehrere saure Gruppen enthaltenden Monomeren.

A3: 5 bis 90 Gew.-% einer zweiten Hülle aus hartem Material mit einer Glastemperatur $T_g$ oberhalb von 25 ° C, bestehend aus, bezogen auf A3:

A31:50 bis 99,9 Gew.-% eines vinylaromatischen Monomeren,

A32:bis 10 Gew.-% eines polyfunktionellen, vernetzend wirkenden Monomeren und/oder mindestens eines pfropfaktiven Monomeren mit zwei oder mehr funktionellen Gruppen unterschiedlicher Reaktivität,

A33:bis 49,9 Gew.-% eines oder mehrerer copolymerisierbarer Monomerer;

A34:0,1 bis 20 Gew.-% eines eine oder mehrere basische Gruppen enthaltenden Monomeren;

A4: bis 85 Gew.-% einer dritten Hülle aus einem Copolymeren aus, bezogen auf A4:

A41:1 bis 99 Gew.-% eines oder mehrerer vinylaromatischer Monomerer,

A42:1 bis 99 Gew.-% eines oder mehrerer copolymerisierbarer Monomerer

**2.** Pfropfcopolymerist gemäß Anspruch 1, enthaltend als Komponente A24 0,1 bis 20 Gew.-%, bezogen auf A2, eines eine oder mehrere basische Gruppen enthaltenden Monomeren und als Komponente A34 0,1 bis 10 Gew.-% eines eine oder mehrere saure Gruppen enthaltenden Monomeren.

**3.** Thermoplastische Formmasse, enthaltend, bezogen auf die Summe aus A, B und C

A: 5 bis 95 Gew.-% eines Pfropfcopolymerisats A nach Anspruch 1 oder 2;

B: 95 bis 5 Gew.-% Polyvinylchlorid und/oder mindestens eines Copolymerisats (B) aus bezogen auf B -

B1: 50 bis 90 Gew.-% Styrol, alpha-Alkylstyrol, kernsubstituiertem Styrol, Alkyl(meth)acrylat mit 1 bis 18 C-Atomen im Alkylrest, oder deren Mischungen (b1) und

B2: 10 bis 50 Gew.-% (Meth)acrylnitril, Maleinsäureanhydrid, Alkyl(meth)acrylat, N-substituiertem Maleinimid oder deren Mischungen (B2);

C: bis zu 90 Gew.-% mindestens eines Polycarbonats C;

D: bis zu 100 Gew.-%, bezogen auf die Mischung aus A, B, und C, übliche Zusatzstoffe.

Europäisches Patentamt

# EUROPÄISCHER RECHERCHENBERICHT

Nummer der Anmeldung
EP 92 12 1355

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | EP-A-0 450 511 (BASF AG)<br>* Ansprüche *<br>* Beispiele *<br>* Seite 3, Zeile 24 - Zeile 30 *<br>* Seite 4, Zeile 23 - Zeile 40 * | 1-3 | C08F285/00<br>//(C08F285/00, 212:08)<br>C08L27/06 |
| A | DATABASE WPI<br>Derwent Publications Ltd., London, GB;<br>AN 78-26084A<br>& JP-A-53 081 661 (MITSUBISHI RAYON KK)<br>* Zusammenfassung * | 1 | |
| A | EP-A-0 290 777 (PPG INDUSTRIES INC)<br>* Ansprüche *<br>* Beispiele * | 1 | |
| | | | RECHERCHIERTE SACHGEBIETE (Int. Cl.5 ) |
| | | | C08F<br>C08L |

Der vorliegende Recherchenbericht wurde für alle Patentansprüche erstellt

| Recherchenort | Abschlußdatum der Recherche | Prüfer |
|---|---|---|
| DEN HAAG | 07 APRIL 1993 | PERSSON E.K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument